# EUROPEAN PATENT APPLICATION

(11) **EP 1 569 421 A1**
(43) Date of publication of application: **31.08.2005**
(21) Application number: 05004114.4
(22) Date of filing: 25.02.2005
(51) Int. Cl.: H04M 1/02

(54) **Portable communication apparatus having triple-axis hinge folder and rotation locking device thereof**

(30) Priority: 26.02.2004 KR 2004013017; 08.09.2004 KR 2004071776
(71) Applicant: SAMSUNG ELECTRONICS CO., LTD., Gyeonggi-do (KR)
(72) Inventor: Park, Jun-Kyu, SAMSUNG ELECTRONICS CO.,LTD., Suwon-si, Gyeonggi-do (KR); Bae, Jong-Gun, SAMSUNG ELECTRONICS CO.,LTD., Suwon-si, Gyeonggi-do (KR); Cheon, Eon-Seoq, SAMSUNG ELECTRONICS CO.,LTD., Suwon-si, Gyeonggi-do (KR)
(74) Representative: Lang, Johannes

(57) **Abstract**

A portable communication apparatus having a triple-axis hinge folder includes a main housing having an opening, a folder; and a first hinge device. The first hinge device is adapted to rotate about the first hinge axis for unfolding and folding the folder from the main housing. A second hinge device is integral with the first hinge device and is adapted to rotate the folder about the second hinge axis, which is parallel to the first hinge axis, while being received in the opening. A slave housing extends from the first and second hinge devices and is adapted to rotate about the second hinge axis together with the folder while being received in the opening.

## Description

### CROSS-REFERENCE TO RELATED APPLICATION

This application claims the benefit under 35 U.S.C § 119(a) of Korean Patent Application No. 2004-13017 entitled "Portable Communication Apparatus Having Triple-axis Hinge Folder and Rotation Locking Device Thereof," filed on February 26, 2004 and Korean Patent Application No. 2004-71776 filed with the same title on September 8, 2004, the entire contents both of which are hereby incorporated by reference.

### BACKGROUND OF THE INVENTION

### Field of the Invention

The present invention relates to a portable communication apparatus. More particularly, the present invention relates to a portable communication apparatus having a triple-axis rotation folder for convenient use in various modes.

### Description of the Related Art

A portable communication apparatus refers to an electronic apparatus which a user carries to perform wireless communications with a desired partner such as cellular phones, PDAs (personal digital assistants), HHPs (hand held phones), digital communication apparatuses, communication apparatuses for games, Internet communication apparatuses, and communication apparatuses having a camcorder function. In consideration of portability, portable communication apparatus design is directed not only toward minimizing size, thickness, and weight, but also toward multimedia availability for a wider variety of functions. In particular, future portable communication apparatuses are expected to incorporate greater multi-functionality and multi-purpose utilization, as well as greater compactness and reduced weight, but also will be modified to be suitable for various multimedia environments or Internet environments.

Additionally, such portable communication apparatuses are now commonly used by people of all ages and all walks of life throughout the world, and are recognized by some people as a nearly indispensable commodity which must be carried all the time.

Conventional portable communication apparatuses may be classified into various categories according to their appearance, such as bar-type, flip-type portable communication apparatus, and folder-type portable communication apparatuses. The bar-type communication apparatus has a single housing shaped like a bar. The flip-type communication apparatus has a flip portion that is rotatably coupled to a bar-shaped housing by a hinge device. The folder-type communication apparatus has a folder which is connected to a single bar-shaped housing by a hinge device in such a manner that the folder can be rotated to fold on or unfold from the housing.

Portable communication apparatuses may also be classified into neck wearable type communication apparatuses and wrist wearable type communication apparatuses according to the position at or the way in which a user puts on the communication apparatus. The neck wearable type communication apparatus is one that a user wears around the neck using a string or the like, while the wrist wearable type communication apparatus is one that a user wears around the wrist.

In addition, portable communication apparatuses may be classified into swing-type communication apparatuses and sliding-type communication apparatuses according to ways of opening and closing the communication apparatuses. In the swing-type portable communication apparatus, two housings are coupled to each other so that one housing rotates to be opened or closed relative to the other while they face each other. In the sliding-type portable communication apparatus, two housings are coupled to each other in such a manner that one housing slides along a longitudinal direction to be opened or closed relative to the other. These variously classified portable communication apparatuses can be easily understood by those skilled in the art.

Meanwhile, conventional portable communication apparatuses now tend to have a function of transmitting data at a high speed in addition to the basic function of performing voice communication. In other words, according to the increase of demand by consumers, portable communication apparatuses now tend to provide a service using a wireless communication technology capable of transmitting data at a high speed.

Recent portable communication apparatuses tend to be equipped with a camera lens for transmission of video signals. In other words, current portable communication apparatuses have an external or imbedded camera lens module which enables a user to perform video communication with a desired partner or to take photographs of a desired subject.

However, conventional portable communication apparatuses equipped with a camera lens module have problems as follows:

When an embedded camera lens module is positioned on the main housing, the camera lens is vulnerable to damage because of the absence of additional means to protect the camera lens module from foreign substances in the external environments. When an external camera lens module is positioned on the main housing, it is often exposed to the elements and is difficult to carry.

When a housing equipped with an external camera lens module is rotated, the user can neither directly rotate the lens nor fix it after rotation. When the lens is rotated to an original position, the user must directly hold it because there is no holding device.

In addition, the user must manually hold the embedded or external camera lens module to rotate or draw it for use.

Accordingly, there is a need for an improved swing-type portable terminal for providing communications services.

### SUMMARY OF THE INVENTION

An aspect of the present invention is to provide a portable communication apparatus having a triple-axis rotation folder for convenient use in a phone mode or in a camera photographing mode.

Another object of the present invention is to provide a portable communication apparatus which can be conveniently used as a portable communication terminal and as a camcorder simultaneously.

Another object of the present invention is to provide a portable communication apparatus having a camera lens, a camera lens operation key, two display devices, and two speaker devices positioned in suitable places for maximized space utilization of the portable apparatus.

Another object of the present invention is to provide a rotation locking device of a portable communication apparatus adapted to automatically rotate a housing, as a button unit positioned on the portable communication terminal is pressed, to substantially expose/hide a camera lens module.

Another object of the present invention is to provide a rotation locking device of a portable communication apparatus having a locking device unit adapted to rotate a housing, as a button unit positioned on the portable communication terminal is pressed, or lock it to substantially expose/hide a camera lens module.

The foregoing and other objects and advantages are substantially realized by providing a portable communication apparatus including a main housing having an opening, a folder, and a first hinge device adapted to rotate about a first hinge axis for unfolding and folding the folder from the main housing about the first hinge axis. A second hinge axis integral with the first hinge device and adapted to rotate the folder about a second hinge axis. The second hinge axis is parallel to the first hinge axis, while being received in the opening. A slave housing extending from the first and second hinge devices and the folder are adapted to rotate about the second hinge axis while being received in the opening.

The foregoing and other objects and advantages are also substantially realized by providing a portable communication apparatus including a main housing having an opening and a first key array composed of a number of keys positioned adjacent to the opening, main housing extends in a longitudinal direction. A slave housing extends parallel to the longitudinal direction of the main housing, and is received in the opening and adapted to rotate in the opening. A triple-axis hinge folder having a first display device is adapted to rotate from the main housing about a first hinge axis, about a second hinge axis which is parallel to the first hinge axis and which is the rotation axis of the slave housing, and about a third hinge axis which is perpendicular to each of the first and second hinge axes. A camera lens module is positioned on a lateral surface of the slave housing and adapted to be substantially exposed or substantially hidden, depending upon positioning about the second hinge axis.

The foregoing and other objects and advantages are further substantially realized by providing a portable communication apparatus including a main housing having an opening, a slave housing adapted to rotate in the opening in such a manner that the lateral surfaces thereof are substantially exposed or substantially hidden depending upon a predetermined angle of rotation. A triple-axis hinge folder is adapted to rotate from the main housing about a first hinge axis, about a second hinge axis which is parallel to the first hinge axis and which is the rotation axis of the slave housing, and about a third hinge axis which is perpendicular to each of the first and second hinge axes. A camera lens module is positioned on a lateral surface of the slave housing and is adapted to be substantially exposed or substantially hidden depending upon the position of the folder about the second hinge axis.

In accordance with another aspect of the present invention, there is provided a rotation locking device of a portable communication apparatus having a main housing having an opening and a hinge folder adapted to unfold from and fold in relation to the main housing about a first hinge axis. The rotation locking device includes a slave housing adapted to rotate in the opening so that that the lateral surfaces thereof are rotated, and the slave housing being substantially exposed or hidden depending upon rotatable positioning. A camera lens module is positioned on at least the lateral surfaces of the slave housing and is adapted to be automatically exposed or hidden according to whether the slave housing is rotated or not. An automatic rotation-type hinge device is provided including a second hinge axis which is parallel to the first hinge axis and is adapted for automatically rotating the folder and the slave housing when a button unit is pressed, and the folder and the slave housing being automatically rotatable about the second hinge axis while being received in the opening A locking device unit is adapted to unlock the folder and the slave housing, as the button unit is pressed, so that the folder and slave housing can automatically rotate and lock when rotated in the opposite direction.

Other objects, advantages, and salient features of the invention will become apparent to those skilled in the art from the following detailed description, which, taken in conjunction with the annexed drawings, discloses preferred embodiments of the invention.

### BRIEF DESCRIPTION OF THE DRAWINGS

The above and other objects, features and advantages of the present invention will be more apparent from the following detailed description taken in conjunction with the accompanying drawings, in which:
FIG. 1 is a top-side perspective view showing a portable communication apparatus having a folder folded, in accordance with an embodiment of the present invention;
FIG. 2 is a top view of the portable communication apparatus shown in FIG. 1;
FIG. 3 is a bottom-side perspective view showing a portable communication apparatus, with its folder folded, according to an exemplary embodiment of the present invention;
FIG. 4 is a bottom view of the portable communication apparatus shown in FIG. 3;
FIG. 5 is a perspective view showing a portable communication apparatus, with its folder completely unfolded about a first hinge axis in a phone mode, in accordance with an embodiment of the present invention;
FIG. 6 is a perspective view showing a portable communication apparatus, with its folder unfolded approximately 90° about a second hinge axis, in accordance with an embodiment of the present invention;
FIG. 7 is a perspective view showing a portable communication apparatus, with its folder unfolded approximately 90° about a third hinge axis in a camera lens photographing mode, in accordance with an embodiment of the present invention;
FIG. 8a is a lateral view of the portable communication apparatus shown in FIG. 7;
FIG. 8b is another lateral view of the portable communication apparatus shown in FIG. 7;
FIG. 9 is an exploded perspective view showing from below a terminal a rotation locking device of a portable communication apparatus, with its folder folded, in accordance with an embodiment of the present invention;
FIG. 10 is a perspective view showing a portable communication apparatus, with its folder completely unfolded about a first hinge axis in a phone mode, in accordance with an embodiment of the present invention;
FIG. 11 is a bottom view of the portable communication apparatus shown in FIG. 10;
FIG. 12 is a top view of the portable communication apparatus shown in FIG. 10;
FIG. 13 is a top view magnifying part A of FIG. 12 prior to actuation of a locking device unit of a rotation locking device of a portable communication apparatus;
FIG. 14 is a top view magnifying part A of FIG. 12 after actuation of a locking device unit of a rotation locking device of a portable communication apparatus;
FIG. 15 is a perspective view showing a rotation locking device of a portable communication apparatus, with its folder unfolded approximately 90° about a second hinge axis by an automatic rotation-type hinge device in a camera lens photographing mode, in accordance with an embodiment of the present invention;
FIG. 16 is a lateral view of the rotation locking device of a portable communication apparatus shown in FIG. 15; and
FIG. 17 is another lateral view of the rotation locking device of a portable communication apparatus shown in FIG. 15.

Throughout the drawings, the same drawing reference numerals will be understood to refer to the same elements, features, and structures.

### DETAILED DESCRIPTION OF THE EXEMPLARY EMBODIMENTS

The matters defined in the description such as a detailed construction and elements are provided to assist in a comprehensive understanding of the embodiments of the invention. Accordingly, those of ordinary skill in the art will recognize that various changes and modifications to the embodiments described herein can be made without departing from the scope and spirit of the invention. Also, descriptions of well-known functions or constructions are omitted for conciseness.

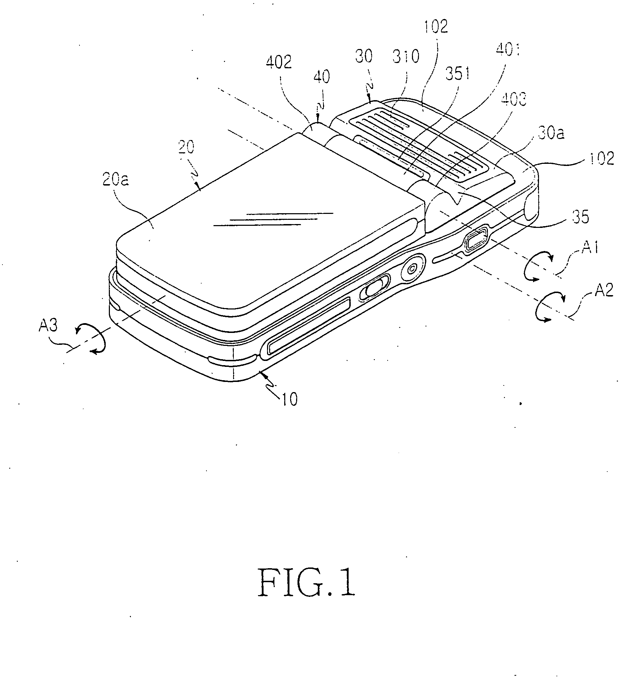

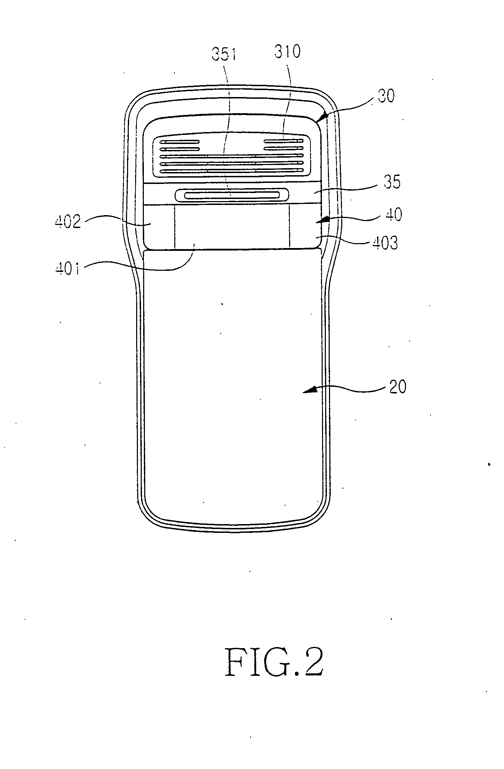

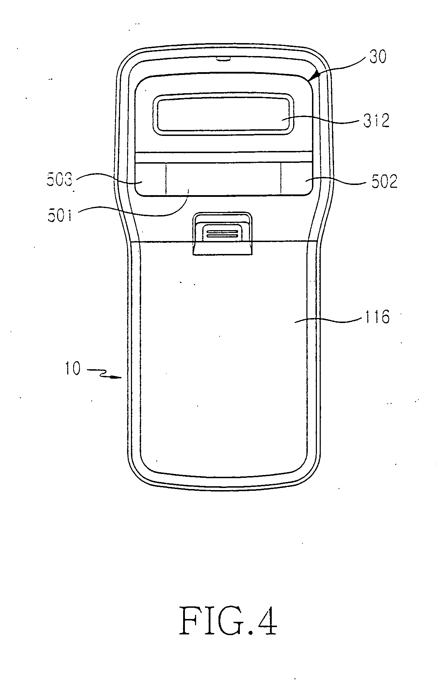

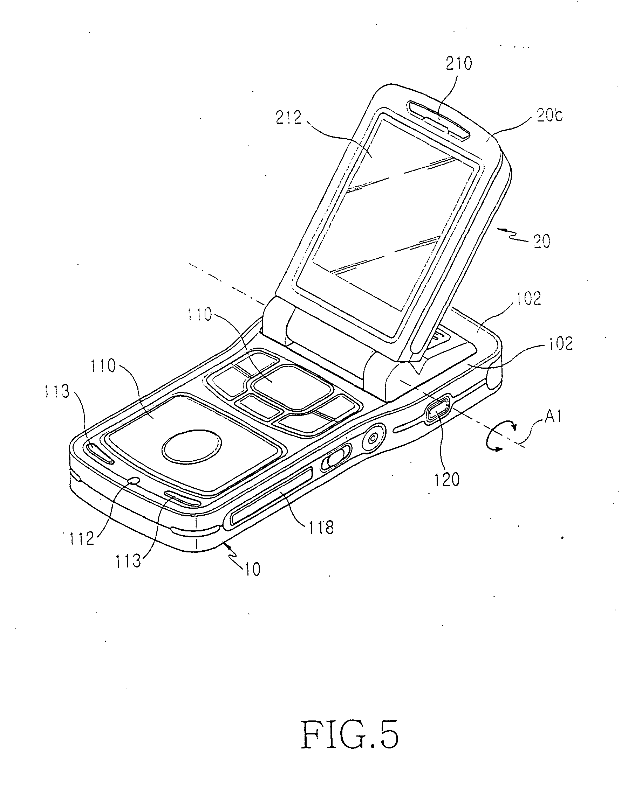

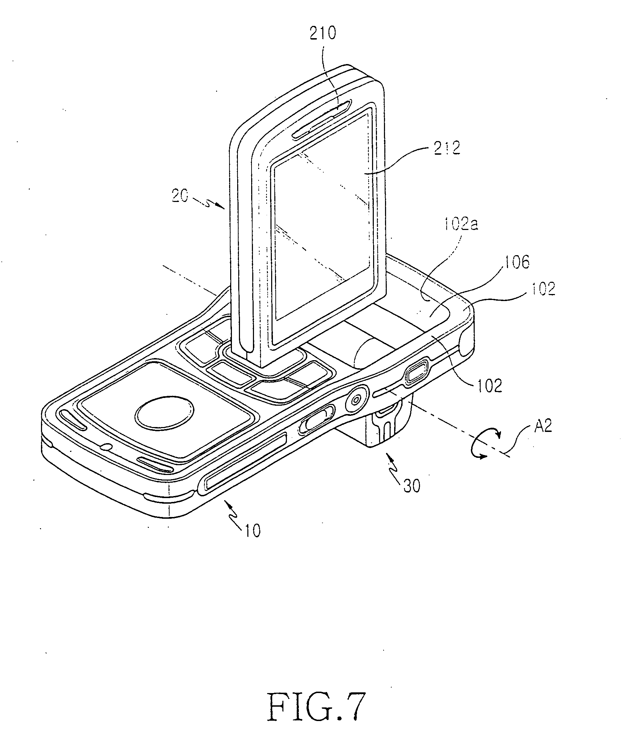

It should be noted that the portable communication apparatus according to the aspects of the present invention has a folder which can rotate about three axes for convenient use in a phone mode or in a camera photographing mode. FIGS. 1-4 correspond to a phone standby mode of the portable communication apparatus according to the present invention. FIG. 5 corresponds to a phone mode thereof, and FIGS. 7-8b correspond to a camera photographing mode thereof.

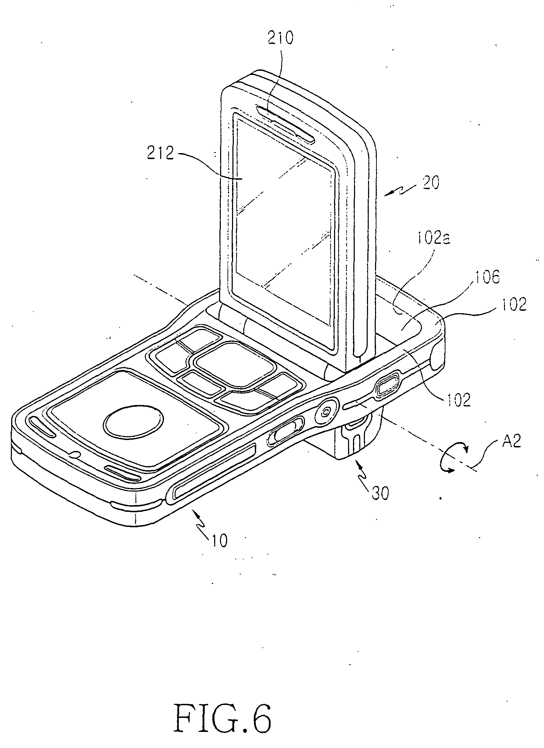

As shown in FIGS. 1-4, the portable communication apparatus according to exemplary embodiments of the present invention includes a main housing 10 having an opening 106 (shown in FIG. 6); a folder 20; a first hinge device 40 adapted to unfold/fold the folder 20 from/on the main housing 10 about a first hinge axis A1; a second hinge device 50 integral with the first hinge device 40 and adapted to rotate the folder 20 about a second hinge axis A2, which is parallel to the first hinge axis A1, while being received in the opening 106; and a slave housing 30 extending from the first and second hinge devices 40 and 50 and adapted to rotate about the second hinge axis A2 together with the folder 20 while being received in the opening 106. The first and second hinge axes A1, A2 are spaced from each other, and the second hinge axis A2 extends through both lateral surfaces 10c of the main housing.

The opening 106 is provided for the rotational motion of the first and second hinge devices 40, 50, as well as of the slave housing 30. The second hinge device 50 and the slave housing 30 are adapted for rotational movement while being received in the opening 106. Specifically, the opening 106 exposes a predetermined region of the top and bottom surfaces 10a, 10b of the main housing 10 and is surrounded by the inner wall 102a of the upper peripheral portion 102 of the main housing 10 to provide a space necessary for smooth rotation.

The first and second hinge devices 40, 50 and the slave housing 30 are integral with one another. Therefore, the first and second hinge devices 40, 50 accompany the slave housing 30. Particularly, the first and second hinge devices 40, 50 rotate together with the slave housing 30 as the folder 20 rotates about the second hinge axis A2.

As shown in FIGS. 1-4, the first hinge device 40 is substantially protrudes from the main housing 10 when the folder 20 is folded on the main housing 10. The top and bottom surfaces 30a, 30b of the slave housing 30 are exposed by the opening 106, while the lateral surfaces 30c, 30d thereof are covered by the peripheral portion 102. The second hinge device 50 is continually received in the opening 106.

As shown in FIG. 5, the main housing 10 includes a first key array 110 composed of a number of keys positioned on the top surfaces 10 thereof, a microphone device 112 positioned adjacently to the first key array 110, second key arrays 118, 119, and 120 composed of a number of keys positioned on the lateral surface 10c thereof, a lighting device 122 positioned adjacently to the second key array 119, and a battery pack 116 positioned on the bottom surface 10b thereof. The battery pack 116 can be fastened to and removed from the bottom surface 10b by a locking knob 114. The main housing 10 also has an antenna device (not shown) embedded in the upper end thereof.

Additionally, dampers 113 are positioned on both sides of the microphone device 112 to dampen any impact generated when the folder 20 is folded.

The folder 20 has a top surface 20a, which is configured as a planar surface, and includes a first speaker device 210 positioned on the bottom surface 20b thereof and a first display device 212 positioned adjacently to the first speaker device 210. The folder 20 is adapted to rotate about a third hinge axis A3 which is perpendicular to each of the first and second hinge axes A1 and A2. The folder 20 may be referred to as a "triple-axis hinge folder", because it can rotate about each of the first, second, and third hinge axes A1, A2, and A3. A user can reverse the top or bottom surface 20a or 20b of the folder 20 by rotating it about the third hinge axis A3.

After rotating approximately 90° as shown in FIG. 6, the folder 20 can rotate about the third hinge axis A3 as shown in FIG. 7 so that the user can take pictures of a desired object while watching the desired objects being taken through the first display device 212 in a camera photographing mode. The range of rotation of the folder 20 about the first hinge axis A1 is approximately 0-150°, about the second hinge axis A2 is approximately 0-90°, and about the third hinge axis A3 is approximately 0-180°.

The folder 20 can rotate about the third hinge axis A3 without interference only after it has rotated a predetermined angle or more about the first hinge axis A1 to be unfolded.

As shown in FIG. 1, a slot 35 extends in the same direction as the first hinge axis A1 between the first hinge device 40 and the slave housing 30. The slot 35 limits the range of rotation of the folder 20 and has a substantially elastic member 351 of flexible material positioned on the bottom thereof. The elastic member 351 dampens any impact generated when the folder 20 is completely unfolded about the first hinge axis A1. The elastic member 351 is preferably made up of rubber or silicon material and extends along the first hinge axis A1.

The slave housing 30 is surrounded by the upper peripheral portion 102 of the main housing and has at least one second speaker device 310 positioned on the top surface 30a thereof. A second display device 312 is positioned on the bottom surface 30b thereof. The second speaker device 310 is preferably made up of a stereo speaker device for providing stereo sound and the second display device 312 is preferably made up of an LCD.

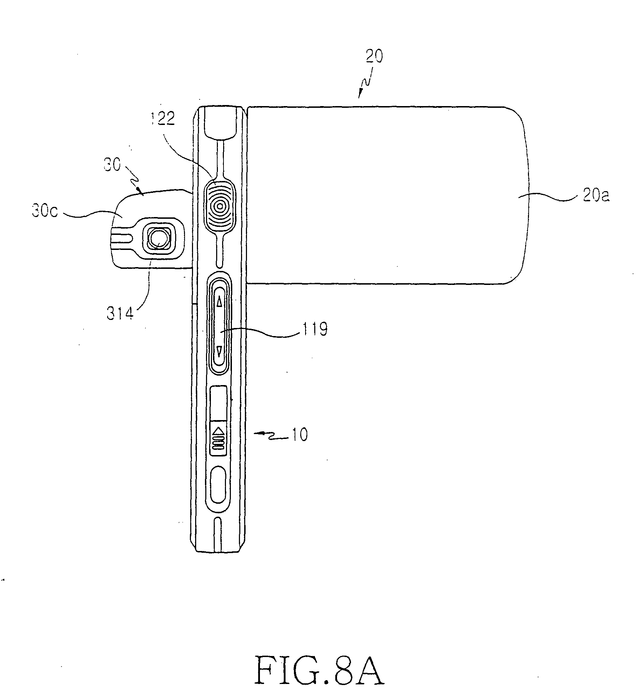

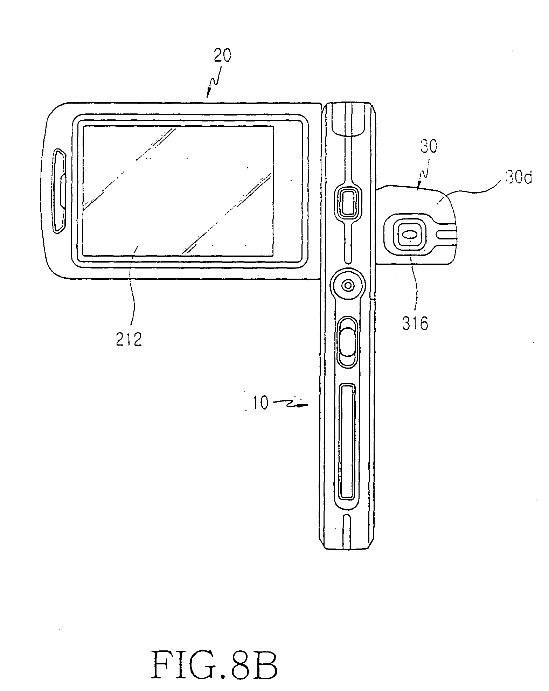

As shown in FIGs. 8a and 8b, the slave housing 30 has a camera lens 314 positioned on a lateral surface 30c thereof and a camera lens operation key 316 positioned on the other lateral surface 30d thereof.

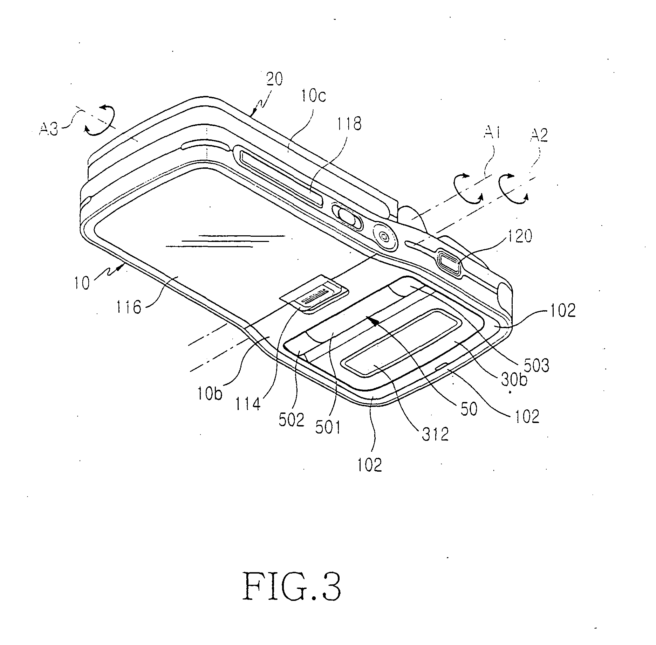

The camera lens 314 is substantially hidden when the folder 20 is folded on the main housing 10 as shown in FIGs. 1 and 3 and is substantially exposed in a state as shown in FIGs. 6 and 7. Specifically, the camera lens 314 is exposed when the folder 20 is rotated a predetermined angle or more about the second hinge axis A2, so that the user can take pictures of a desired object with the exposed camera lens 314.

When the folder 20 is to be rotated about the first hinge axis A1, the user performs unfolding or folding operations while holding the second hinge device 50 positioned on the bottom surface 10b of the main housing and the bottom surface 30b of the slave housing. The resulting state is shown in FIG. 5. If the folder 20 is unfolded about the second hinge axis A2 without holding the bottom surface of the slave housing, a state as shown in FIG. 6 is obtained. If the folder 20 is subsequently rotated approximately 90° about the third hinge axis A3, a state as shown in FIG. 7 is obtained.

It should be noted that the direction of rotation of the folder can be reversed by the third hinge axis. Specifically, although the first display device 212 of the folder 20 is shown to face in the opposite direction to the camera lens module 314 in FIG. 7, the folder may be rotated about the third hinge axis A3 so that the first display device 212 faces in the same direction as the camera lens module 314. When the first display device 212 faces in the opposite direction to the camera lens 314, the user can conveniently take pictures of a desired object. When the first display device 212 faces in the same direction as the camera lens 314, the user can take pictures of his own face or perform video communication with a desired partner while watching the first display device 212.

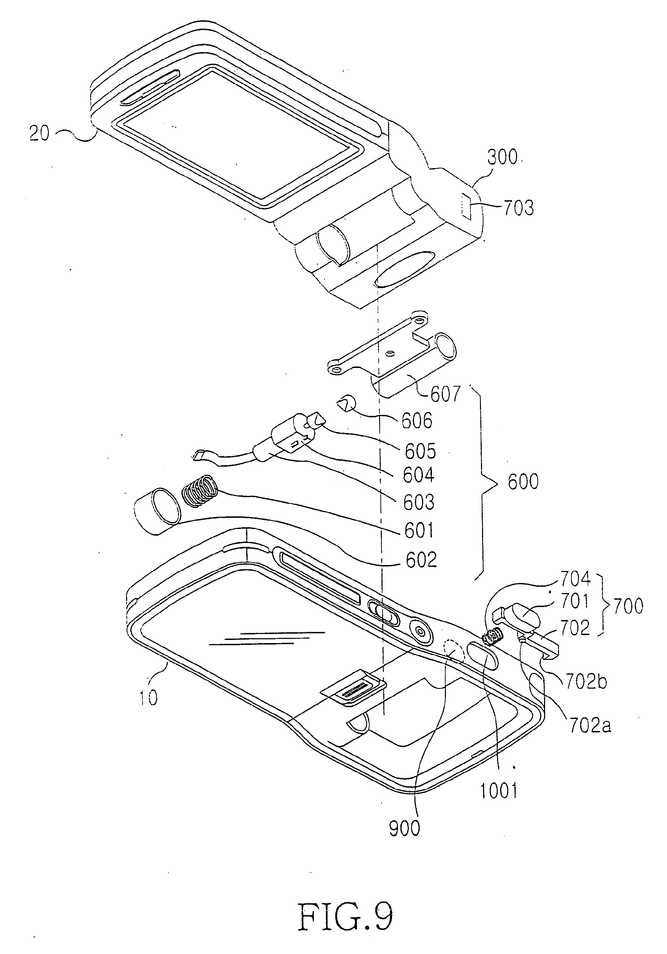

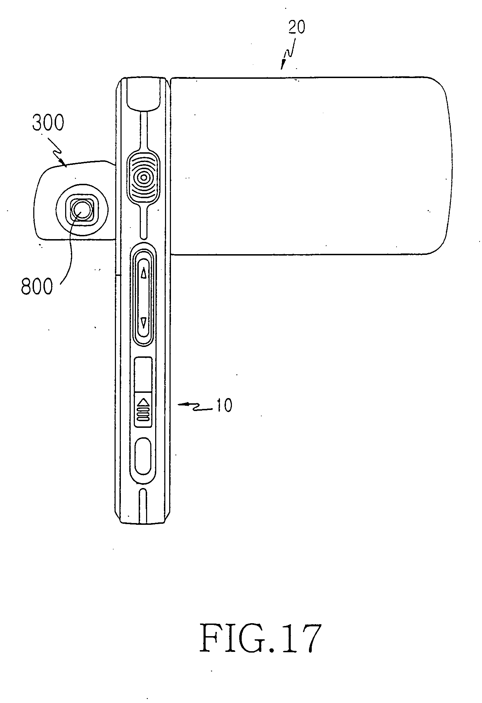

As shown in FIGs. 9 to 17, a rotation locking device of a portable communication apparatus according to an exemplary embodiment of the present invention is adapted to rotate a folder 20 about three hinge axes A1, A2, and A3.

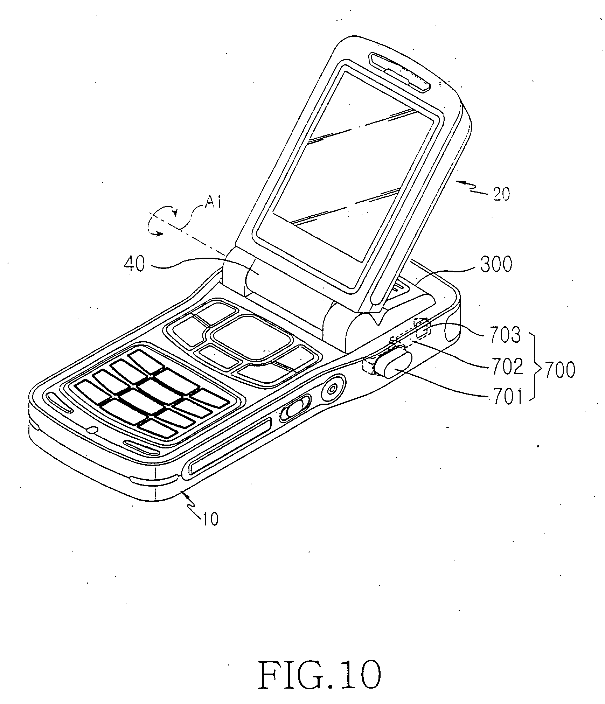

When a user wants to use the terminal in a phone mode as shown in FIG. 10, the folder 20 is rotated about a first hinge axis A1 of a first hinge device 40 from a main housing 10.

The range of rotation of the folder 20 is approximately 0-150°.

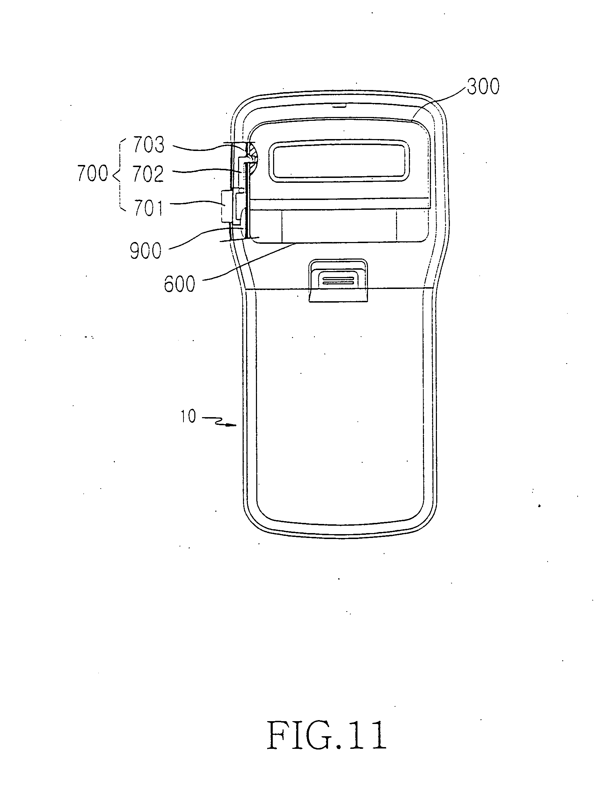

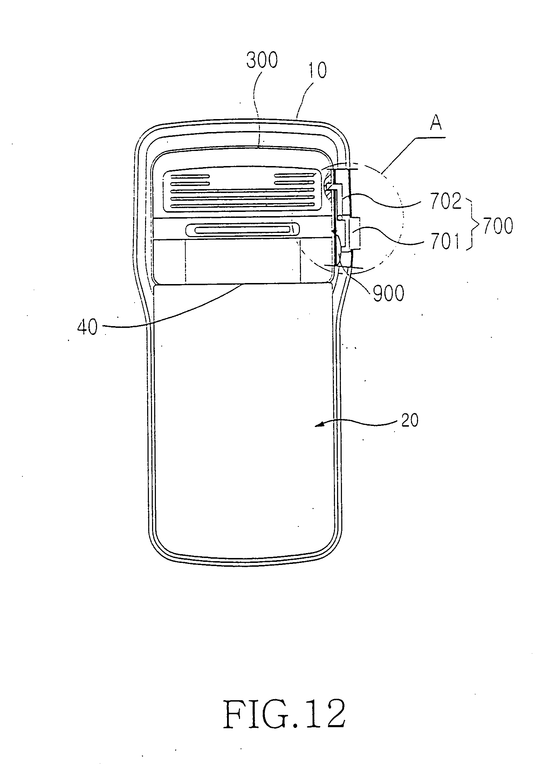

The terminal is now ready to be used in a phone mode. If the user wants to use the terminal in a camera photographing mode as shown in FIGS. 11 and 12, a button unit 701 positioned in a mounting groove 1001 on a lateral surface of the main housing 10 is pressed.

As shown in FIG. 9, the terminal is provided with a locking device unit 700 to unlock the folder 20 and a slave housing 300. As button unit 701 is pressed, the folder 20 and slave housing 300 can rotate in one direction and to lock them when they rotate in the opposite direction.

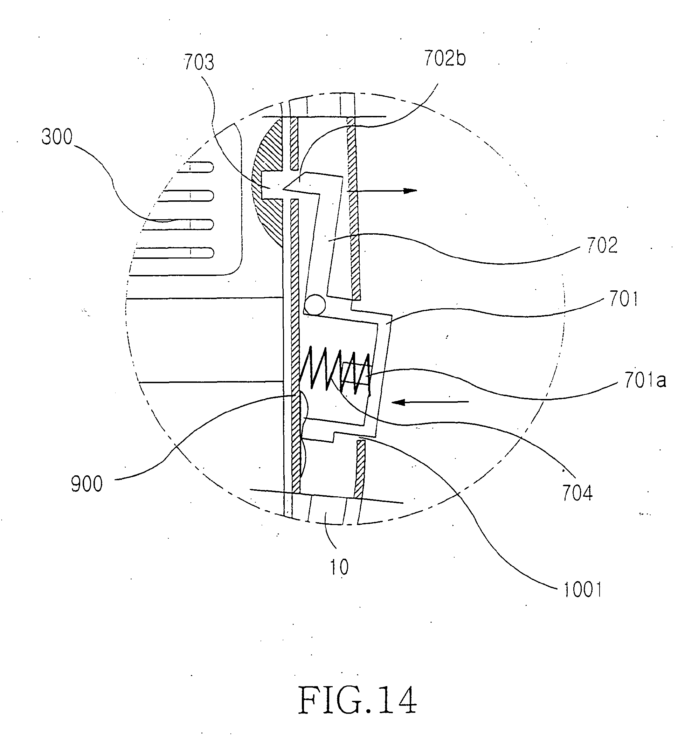

If the button unit 701 is pressed as shown in FIG. 14, a side of a locker unit 702 of the button unit 701 is forced toward the interior of the terminal in the same direction as the button unit is pressed, while the other side thereof is moved toward the exterior of the terminal in the opposite direction. As the locker unit 702 see-saws in this manner, a lock protrusion 702b formed on the other side of the locker unit 702 is released and unlocked from a locker groove 703 formed on a lateral surface of the slave housing 300.

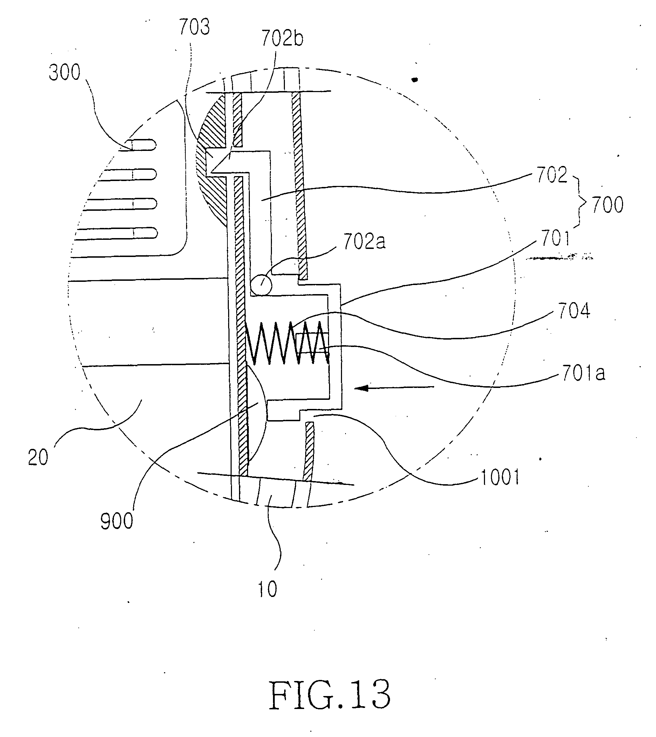

As shown in FIGS. 13 and 14, the locker unit 702 has a hinge protrusion 702a formed at the center thereof to enable the locker unit 702 to see-saw.

When the button unit 701 contacts a dome switch 900 positioned below it as shown in FIGS. 13 and 14, a contact signal is transmitted from the dome switch 900 to an automatic rotation-type hinge device 600.

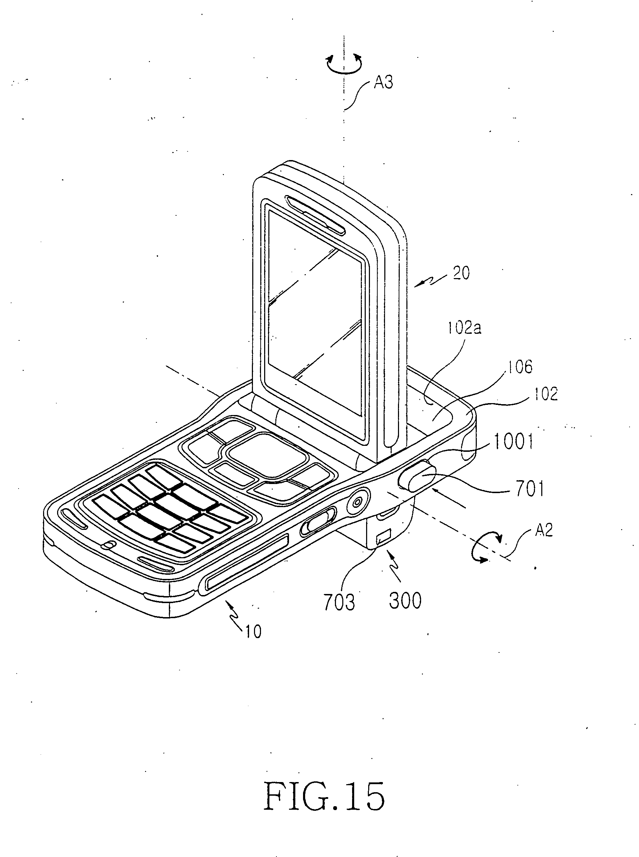

In response to the transmitted signal, the automatic rotation-type hinge device 60 automatically rotates the folder 20 and the slave housing 300 as shown in FIGS. 9 and 15 and exposes the lateral surfaces of the slave housing 300. As a camera lens module 800 positioned on a surface of the slave housing 300 is rotated together and exposed to the exterior, the camera lens is exposed.

As shown in FIG. 15, the folder 20 and the slave housing 300 rotate 0-90° from the main housing 10. The folder 20 and the slave housing 300 rotate about the second hinge axis A2 of the automatic rotation-type hinge device 600.

The slave housing 300 rotates in an opening 106 formed in the main housing 10 as shown in FIG. 15.

As shown in FIG. 9, the automatic rotation-type hinge device 600 has an elastic means 601, a hinge dummy 602, a driving motor 603, a reduction module 604, a hinge shaft 605, and a hinge cam 606, all of which are successively positioned on a hinge arm 607, to automatically rotate the folder 20 and the slave housing 300.

As a contact signal is transmitted from the dome switch 900 to the driving motor 603, the rotational force from the driving motor 603 is reduced by the reduction module 604 and rotates the hinge shaft 604. The hinge shaft 605 then engages with the hinge cam 606, which faces the hinge shaft 605, and automatically rotates together with it.

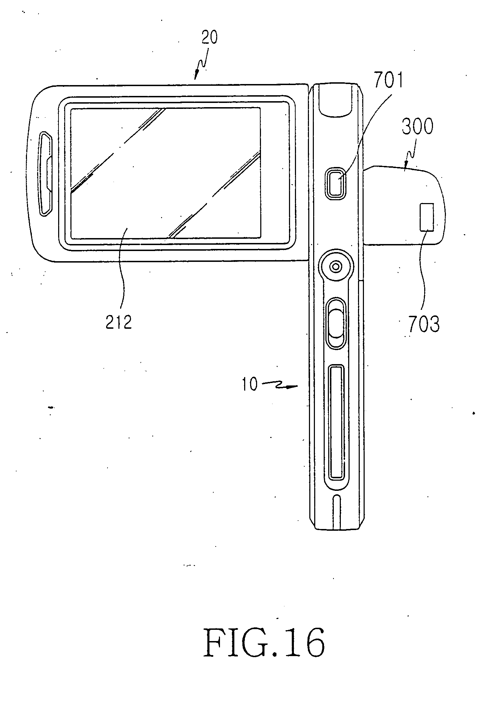

The user can rotate the folder 20 in the range of 0-180° by means of the third hinge axis A3 for use as shown in FIGS. 16-17.

As the slave housing 300 automatically rotates, the camera lens module 800 positioned on a lateral surface of the slave housing 300 is exposed so that the user can takes pictures of a desired object through the camera lens.

If the user does not want to user the terminal in a camera photographing mode any longer, the user can rotate the folder 20 and the slave housing 300 about the second hinge axis A2 in a direction approaching the main housing. The locker groove 703 of the slave housing 300 then rotates and is inserted into and locked by the lock protrusion 702b of the locker unit 702 as shown in FIGS. 13-14.

The elastic force from the coil spring 704 positioned on the rear surface of the button unit 701 causes the lock protrusion 702b to see-saw and to be inserted into the locker groove 703 to stop the folder 20 and the slave housing 300 from rotating.

The button unit 701 has a coil spring 704 positioned on the rear surface thereof to provide an elastic force so that the locker unit 702 can see-saw as the button unit 701 is pressed.

The coil spring 704 is inserted into an elastic support protrusion 701 a formed on the rear surface of the button unit 701.

As the camera lens module 800 is inserted into the opening 106 of the main housing 10 and is continually received therein, the camera lens is substantially hidden.

In addition, if the button unit 701 of the locking device unit 700 is pressed then, the folder 20 and a slave housing 300 are rotated and also, a current mode is changed into a camera photographing mode.

As mentioned above, the present invention provides a rotation locking device of a portable communication apparatus having a locking device unit adapted to automatically rotate a folder and a slave housing, as a button unit is pressed to place the apparatus in a camera photographing mode, or out of a camera photographing mode, and easily substantially exposing or substantially hiding the camera lens module for improved function of the apparatus in a camera photographing mode.

While the invention has been shown and described with reference to certain exemplary embodiments thereof, it will be understood by those skilled in the art that various changes in form and details may be made therein without departing from the spirit and scope of the invention as defined by the appended claims.

## Claims

1. A portable communication apparatus comprising:
a main housing having an opening;
a folder;
a first hinge device adapted to rotate about a first hinge axis for unfolding and folding the folder from the main housing;
a second hinge device integral with the first hinge device and adapted to rotate the folder about a second hinge axis, the second hinge axis being parallel to the first hinge axis, while being received in the opening; and
a slave housing extending from the first and second hinge devices, the slave housing and the folder adapted to rotate about the second hinge axis while being received in the opening.

2. A portable communication apparatus as claimed in claim 1, wherein the main housing comprises a first key array composed of a number of keys positioned on a top surface thereof and a microphone device positioned adjacent to the first key array, and the folder further comprises a first display device positioned on a bottom surface thereof and a first speaker device positioned adjacent to the first display device.

3. A portable communication apparatus as claimed in claim 1, wherein' the folder is adapted to rotate about a third hinge axis, the third axis is perpendicular to each of the first and second hinge axes, so that the top or bottom surfaces thereof are reversible.

4. A portable communication apparatus as claimed in claim 1, wherein a slot extends parallel to the first hinge axis between the first hinge device and the slave housing.

5. A portable communication apparatus as claimed in claim 4, wherein the slot limits the rotation of the folder and has an elastic member of substantially flexible material positioned on a bottom surface thereof.

6. A portable communication apparatus as claimed in claim 1, wherein the slave housing is positioned so that it is surrounded by an upper peripheral portion of the main housing.

7. A portable communication apparatus as claimed in claim 1, wherein the slave housing has at least one second speaker device positioned on a top surface thereof for providing stereo sound.

8. A portable communication apparatus as claimed in claim 1, wherein the slave housing has a second display device positioned on a bottom surface thereof.

9. A portable communication apparatus as claimed in claim 1, wherein the slave housing has a camera lens positioned on a lateral surface thereof and a camera lens operation key positioned on the other lateral surface thereof.

10. A portable communication apparatus as claimed in claim 9, wherein the camera lens is substantially hidden when the folder is folded on the main housing and is substantially exposed when the folder is rotated a predetermined angle about the second hinge axis.

11. A portable communication apparatus as claimed in claim 1, wherein when the folder is folded on the main housing, the first hinge device protrudes from the top surface of the main housing and the second hinge device is received in the opening.

12. A portable communication apparatus as claimed in claim 1, wherein the folder is adapted to rotate about a third hinge axis only after it has rotated a predetermined angle about the second hinge axis.

13. A portable communication apparatus as claimed in claim 1, wherein the opening is adapted for permitting rotational motion of the slave housing.

14. A portable communication apparatus as claimed in claim 1,
wherein the main housing has a second key array composed of at least one key and a lighting device disposed adjacent to the at least one key, the second key array and the lighting device are positioned on at least one lateral surface of the main housing.

15. A portable communication apparatus comprising:
a main housing having an opening and a first key array composed of a number of keys positioned adjacent to the opening, the main housing extends in a longitudinal direction;
a slave housing extends parallel to the longitudinal direction of the main housing, and is received in the opening and adapted to rotate in the opening;
a triple-axis hinge folder having a first display device, and the triple -axis hinge folder adapted to rotate from the main housing about a first hinge axis, about a second hinge axis which is parallel to the first hinge axis and also being the rotation axis of the slave housing, and about a third hinge axis being perpendicular to each of the first and second hinge axes; and
a camera lens module positioned on a lateral surface of the slave housing and adapted to be substantially exposed or substantially hidden, depending upon positioning about the second hinge axis.

16. A portable communication apparatus as claimed in claim 15, further comprising
a first speaker device positioned adjacent to the first display device.

17. A portable communication apparatus as claimed in claim 15, wherein the slave housing has a second speaker device positioned on a bottom surface thereof and a second display device positioned on a top surface thereof.

18. A portable communication apparatus as claimed in claim 15, wherein the second hinge axis extends through both lateral surfaces of the main housing.

19. A portable communication apparatus as claimed in claim 15, wherein the slave housing has a camera lens operation key positioned on the other lateral surface thereof.

20. A portable communication apparatus comprising:
a main housing having an opening;
a slave housing adapted to rotate in the opening so that the lateral surfaces thereof are substantially exposed or substantially hidden, depending upon a predetermined angle of rotation;
a triple-axis hinge folder adapted to rotate from the main housing about a first hinge axis, a second hinge axis being parallel to the first hinge axis and being the same rotation axis of the slave housing, and about a third hinge axis being perpendicular to each of the first and second hinge axes; and
a camera lens module positioned on a lateral surface of the slave housing and adapted to be substantially exposed or substantially depending upon the position of the folder about the second hinge axis.

21. A rotation locking device of a portable communication apparatus having a main housing having an opening and a hinge folder being adapted to unfold from and fold in relation to the main housing about a first hinge axis, the rotation locking device comprising:
a slave housing adapted to rotate in the opening so that lateral surfaces thereof are automatically rotated, and the slave housing being substantially exposed or substantially hidden depending upon rotatable positioning;
a camera lens module positioned on at least one of the lateral surfaces of the slave housing and adapted for automatically positioning the camera lens for exposing or hiding the camera lens depending upon rotatable positioning of the the slave housing;
an automatic rotation-type hinge device providing a second hinge axis which is parallel to the first hinge axis, the automatic rotation-type hinges device being adapted to automatically rotate the folder and the slave housing when a button unit is pressed the folder and the slave housing being automatically rotatable about the second hinge axis while being received in the opening; and
a locking device unit adapted to unlock the folder and the slave housing, as the button unit is pressed, so that the folder and slave housing can automatically rotate and lock when rotated in the opposite direction.

22. A rotation locking device of a portable communication apparatus as claimed in claim 21, wherein
the automatic rotation-type hinge device has an elastic means, a hinge dummy, a driving motor, a reduction module, a hinge shaft, and a hinge cam being positionable on a hinge arm for automatically rotating the folder and the slave housing.

23. A rotation locking device of a portable communication apparatus as claimed in claim 21, wherein
the range of rotation of the folder is approximately 0-90°.

24. A rotation locking device of a portable communication apparatus as claimed in claim 21, wherein
the locking device unit comprises a button unit formed on a lateral surface of the main housing, and being exposed to the exterior;
a locker unit formed on the button unit and adapted to see-saw as the button unit is pressed by an external force;
a locker groove formed on a lateral surface of the slave housing in a position corresponding to the locker unit, so that the locker unit can be inserted into or released from the locker groove as the locker unit see-saws; and
an elastic means positioned on the rear surface of the button unit to provide an elastic force so that the locker unit see-saws as the button unit is pressed.

25. A rotation locking device of a portable communication apparatus as claimed in claim 24, wherein
the locker unit has a hinge protrusion formed thereon so that the locker unit can see-saw.

26. A rotation locking device of a portable communication apparatus as claimed in claim 24, wherein
the locker unit has a lock protrusion formed on an end thereof, being adapted to fasten to and release from the locker groove.

27. A rotation locking device of a portable communication apparatus as claimed in claim 24, wherein
the elastic means comprises a coil spring coupled to an elastic support protrusion formed on a rear surface of the button unit.

28. A rotation locking device of a portable communication apparatus as claimed in claim 24, wherein
the button unit is positioned in a mounting groove formed on a lateral surface of the main housing, and has a connection means positioned on a lower portion thereof for transmitting an electric signal to the automatic rotation-type hinge device for automatically rotating the folder and the slave housing.

29. A rotation locking device of a portable communication apparatus as claimed in claim 28, wherein
the connection means comprises a dome switch.

30. A rotation locking device of a portable communication apparatus comprising:
a main housing having an opening;
a slave housing adapted to rotate in the opening in such a manner that lateral surfaces thereof are exposed or hidden according depending upon rotatable positioning;
a triple-axis hinge folder adapted to rotate from the main housing about a first hinge axis, about a second hinge axis which is parallel to the first hinge axis and being the same rotation axis of the slave housing, and about a third hinge axis being perpendicular to each of the first and second hinge axes;
a camera lens module positioned on a lateral surface of the slave housing being adapted for exposing or hiding the slave housing depending upon rotatable positioning; and
a locking device unit providing a button unit and being adapted to unlock the folder and the slave housing as the button unit is pressed, so that the folder and the slave housing can rotate and lock the folder and slave housing when rotated in the opposite direction.
